# EUROPÄISCHE PATENTANMELDUNG

(11) **EP 3 299 204 A1**
(43) Veröffentlichungstag der Anmeldung: **28.03.2018**
(21) Anmeldenummer: 17193463.1
(22) Anmeldetag: 27.09.2017
(51) Int. Cl.: B60K 17/28, B60K 17/02

(54) **LANDWIRTSCHAFTLICHE ARBEITSMASCHINE**

(30) Priorität: 27.09.2016 DE 102016118250
(71) Anmelder: CLAAS Tractor S.A.S., 78141 Vélizy-Villacoublay Cedex (FR)
(72) Erfinder: Bacle, Thibault, 26300 Chateauneuf sur Isere (FR)
(74) Vertreter: Budach, Steffen

(57) **Zusammenfassung**

Eine landwirtschaftliche Arbeitsmaschine (10) mit einem Antriebsmotor (14), einem mit dem Antriebsmotor (14) verbundenen Fahrgetriebe (16), mindestens einem Maschinenkühlsystem (18), welches als Kühlkreislauf (28) mit einem Kühlmittel ausgestaltet ist, und einem durch den Antriebsmotor (14) antreibbaren Zapfwellengetriebe (12). Gemäß der Erfindung ist das Zapfwellengetriebe (12) fluidisch mit mindestens einem Maschinenkühlsystem (18) der Arbeitsmaschine (10) zum Kühlen und/oder Schmieren des Zapfwellenge-triebes (12) verbunden.

## Beschreibung

Die vorliegende Erfindung betrifft eine landwirtschaftliche Arbeitsmaschine mit einem Zapfwellengetriebe gemäß dem Oberbegriff des Anspruches 1.

Landwirtschaftliche Arbeitsmaschinen, beispielsweise Traktoren, verfügen üblicherweise über Zapfwellen, über welche Anbaugeräte wie Mähwerke angeschlossen und angetrieben werden können. Die Zapfwellen werden über den Antriebsmotor angetrieben, und sind an der Karosserie des Traktors frontseitig und/oder heckseitig herausgeführt. Eine Arbeitsdrehzahl der Zapfwelle wird dabei über ein Zapfwellengetriebe eingestellt.

Die Zapfwellen von landwirtschaftlichen Arbeitsmaschinen werden üblicherweise nicht dauerhaft betrieben, sondern werden nur für bestimmte Arbeitsvorgänge genutzt. Während der Nutzung werden durch die Zapfwelle hohe Drehmomente übertragen, weshalb zur Schmierung und Kühlung der Zapfwelle und des Zapfwellengetriebes ein hoher Durchsatz an Öl erforderlich ist, welches mit einem verhältnismäßig hohen Systemdruck von einer Pumpe des Zapfwellengetriebes gefördert wird. Bei abgeschalteter Zapfwelle hingegen ist lediglich eine Schmierung der drehenden Teile des Zapfwellengetriebes sowie gegebenenfalls das Betätigen einer Bremse erforderlich, wofür ein deutlich geringerer Systemdruck benötigt wird. Von dem Systemdruck hängt auch der Leistungsbedarf der Pumpe ab, so dass diese bei konstant bleibendem Systemdruck eine erhebliche Verlustleistung aufweist, was zu einer Erwärmung des Kühlmittels führt.

Aus der DE 199 18 501 A1 ist eine Hydraulikanlage für eine Zapfwelle mit einer Kupplung in einem Nutzfahrzeug bekannt. Die Hydraulikanlage weist dabei eine die Kupplung, die Bremse und einen Schmierkreis mit Druckflüssigkeit versorgende Pumpe auf. Weiterhin sind ein Steuerventil zum Einschalten und Ausschalten der Kupplung und eine Einrichtung, die ein Druckbegrenzungsventil enthält, das beim Einschalten der Kupplung einen hohen Systemdruck und beim Ausschalten der Kupplung einen niedrigen Systemdruck zur Verfügung stellt, offenbart. Das Druckbegrenzungsventil ist dabei einstellbar, wobei die Einstellung durch einen Beaufschlagungsdruck der Kupplung erfolgt. Nachteilig ist hierbei jedoch neben dem benötigten Bauraum die Verlustleistung, welche durch den Betrieb der Pumpe aufgewendet werden muß.

Es ist daher die Aufgabe der vorliegenden Erfindung eine landwirtschaftliche Arbeitsmaschine mit einem Zapfwellengetriebe bereitzustellen, welches eine verbesserte Energieeffizienz und einen verringerten Bauraum aufweist.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine landwirtschaftliche Arbeitsmaschine mit einem Antriebsmotor, einem mit dem Antriebsmotor verbundenen Fahrgetriebe, mindestens einem Maschinenkühlsystem, welches als Kühlkreislauf mit einem Kühlmittel ausgestaltet ist, und einem durch den Antriebsmotor antreibbaren Zapfwellengetriebe. Gemäß der Erfindung ist das Zapfwellengetriebe fluidisch mit mindestens einem Maschinenkühlsystem der Arbeitsmaschine zum Kühlen und/oder Schmieren des Zapfwellengetriebes verbunden. Durch die Verbindung des Zapfwellengetriebes mit mindestens einem Maschinenkühlsystem, insbesondere dessen Kühlkreislauf, kann das Kühlmittel, beispielsweise Öl, des Maschinenkühlsystems ebenfalls zur Kühlung- und/oder Schmierung des Zapfwellengetriebes genutzt werden. Dies ermöglicht es, das Zapfwellengetriebe pumpenlos auszugestalten, wodurch die Komplexität des Zapfwellengetriebes verringert und dadurch neben den Kosten auch der benötigte Bauraum verringert werden kann. Zudem kann durch die reduzierte Verlustleistung aufgrund des Wegfalls der Pumpe in dem Zapfwellengetriebe die Energieeffizienz der Arbeitsmaschine verbessert werden.

In einer bevorzugten Ausgestaltung der Erfindung ist das Maschinenkühlsystem ein Fahrgetriebekühlsystem und/oder ein Achskühlsystem. Die Maschinenkühlsystem sind sowohl Kühl- als auch Schmiersystem. Das Zapfwellengetriebe kann an die bereits vorhandenen Kühlkreisläufe der Maschinenkühlsysteme für das Fahrgetriebe und/oder ein Kühlsystem für, insbesondere Achsen mit hydrostatischem Antrieb, angeschlossen werden. Dies hat den Vorteil, dass durch die Nutzung bereits vorhandener Kühlsystem die Komplexität verringert und Kosten gesenkt werden können.

Besonders bevorzugt ist ein erstes Ventil zum Steuern des Zuflusses an Kühlmittel in das Zapfwellengetriebe vorgesehen. Dies hat den Vorteil, dass beispielsweise in Abhängigkeit eines Betriebes der Zapfwelle oder sensorabhängig der Druck und/oder Zufluss an Kühlmittel regelbar ist. Zudem kann das erste Ventil an einer geeigneten Stelle außerhalb des Zapfwellengetriebes angeordnet werden, wodurch der, beispielsweise frontseitig an dem Traktor, benötigte Bauraum weiter reduziert werden kann.

In einer bevorzugten Ausgestaltung der Erfindung weist das Zapfwellengetriebe eine Eingangswelle und mindestens eine Abtriebswelle auf, wobei an der Eingangswelle eine Kupplung angeordnet ist. Durch die pumpenlose Ausgestaltung des Zapfwellengetriebes kann eine Kupplung unmittelbar an der Eingangswelle angeordnet werden, was den Vorteil bietet, dass das Zapfwellengetriebe bei geöffneter Kupplung nicht in Bewegung ist. Hierdurch können Energieverlust vermieden und die Effizienz weiter gesteigert werden.

Ferner ist bevorzugt vorgesehen, dass das Zapfwellengetriebe ein zweites Ventil zum Schalten der Kupplung aufweist. Das zweite Ventil ist dabei im Wesentlichen mit dem Systemdruck des Maschinenkühlsystem, oder einem gedrosselten Druck, beaufschlagt. Dies hat den Vorteil, dass der Systemdruck des Maschinenkühlsystems zum Schalten der Kupplung verwendet werden kann. Besonders vorteilhafterweise ist das Zapfwellengetriebe derart ausgestaltet, dass ein Systemdruck eines Maschinenkühlsystems zum Schalten einer Übersetzung des Zapfwellengetriebes nutzbar ist.

Vorteilhafterweise weist das Zapfwellengetriebe eine Schmiereinheit auf. Die Schmiereinheit ermöglicht ein gezieltes Kühlen und Schmieren der Bauteile des Zapfwellengetriebes. Dadurch kann die benötigte Menge an Kühlmittel reduziert werden.

In einer bevorzugten Ausgestaltung der Erfindung weist die Schmiereinheit einen einstellbaren Volumenstrom und/oder Druck auf. Dies kann beispielsweise über ein regelbares Ventil erfolgen, wodurch der benötigte Volumenstrom an Kühlmittel dem tatsächlichen Bedarf angepasst werden kann.

In einer besonders bevorzugten Ausgestaltung der Erfindung ist eine Steuerungseinheit zumindest zur Steuerung der Schmiereinheit, des ersten und/oder zweiten Ventils vorgesehen ist. Dies ermöglicht eine Einstellung der Kühlung und/oder Schmierung entsprechend den tatsächlichen Erfordernissen, wodurch die Energieeffizienz weiter erhöht werden kann.

In einer vorteilhaften Ausgestaltung der Erfindung weist das Zapfwellengetriebe einen Temperatursensor auf. Der Temperatursensor kann mit der Steuerungseinheit verbunden werden und ermöglicht damit eine sensorbasierte Steuerung des Volumenstromes an Kühlmittel, welches dem Zapfwellengetriebe zugeleitet wird.

Nachfolgend wird die Erfindung unter Bezugnahme auf die anliegenden Zeichnungen näher erläutert.

Es zeigt:

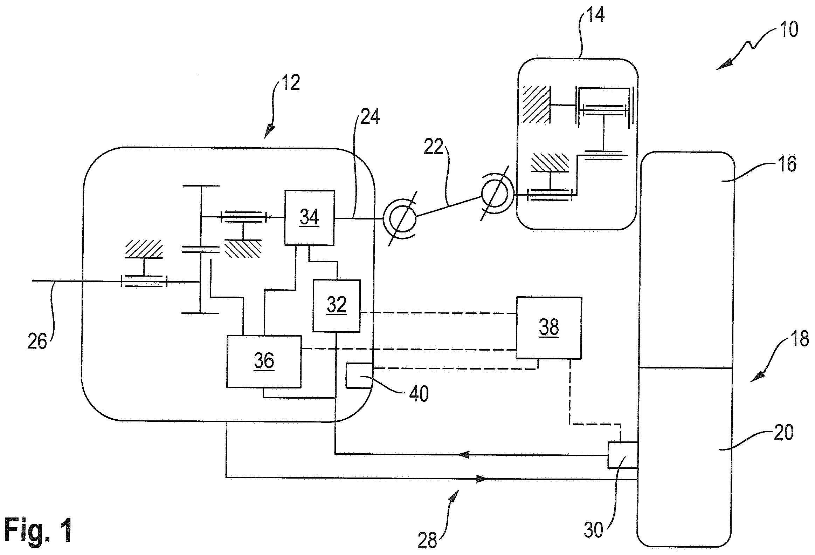

- Fig. 1:: eine schematische Ansicht einer landwirtschaftlichen Arbeitsmaschine mit einem Zapfwellengetriebe.

In Figur 1 ist schematisch eine landwirtschaftliche Arbeitsmaschine 10 in Form eines Traktors mit einem Zapfwellengetriebe 12 dargestellt. Eine landwirtschaftliche Arbeitsmaschine 10 im Sinne der Erfindung kann jedes zur landwirtschaftlichen Arbeit einsetzbare Fahrzeug sein, beispielsweise ein Traktor, ein Frontlader, ein Nutzfahrzeug, eine Baumaschine, oder eine selbstfahrende Erntemaschine wie ein Mähdrescher oder Feldhäcksler. Die landwirtschaftliche Arbeitsmaschine 10 weist einen Antriebsmotor 14 auf, der mit einem Fahrgetriebe 16 verbunden ist, beispielsweise um die Arbeitsmaschine 10 fortzubewegen. Zur Kühlung und Schmierung unterschiedlicher Komponenten weist die Arbeitsmaschine 10 ein oder mehrere Maschinenkühlsysteme 18 auf. So erfolgt eine Kühlung und Schmierung des Fahrgetriebes 16 mittels eines Fahrgetriebekühlsystems 20. Mit dem Antriebsmotor 14 ist das Zapfwellengetriebe 12 über eine Welle 22 zu dessen Antrieb verbunden. Die Welle 22 ist dabei mit der Eingangswelle 34 des Zapfwellengetriebes 12 verbunden, welche mit einer eingestellten oder einstellbaren Übersetzung mit einer Abtriebswelle 26 verbunden ist. Zum Antrieb des Zapfwellengetriebes 12 sind auch andere Konstruktionen denkbar, beispielsweise ein Antrieb des Zapfwellengetriebes 12 über das Fahrgetriebe 16.

Erfindungsgemäß ist das Zapfwellengetriebe 12 mit einem Kühlkreislauf 28 des Fahrgetriebekühlsystems 20, einem Maschinenkühlsystem 18, fluidisch verbunden. Über das Fahrgetriebekühlsystem 20 wird das Zapfwellengetriebe 12 mit einem Volumenstrom an Kühlmittel in Form von Öl gespeist, um eine Kühlung und Schmierung des Zapfwellengetriebes 12 sicherzustellen. Der Volumenstrom kann dabei über ein erstes Ventil 30, welches beispielsweise fahrgetriebeseitig angeordnet sein kann, geregelt werden. Hierbei kann beispielsweise eine Regelung in Abhängigkeit eines Betriebszustandes des Zapfwellengetriebes 12 erfolgen, so dass bei einem Betrieb des Zapfwellengetriebes 12 ein hoher Volumenstrom und bei einem Stillstand des Zapfwellengetriebes 12 ein geringer oder gar kein Volumenstrom an Kühlmittel in das Zapfwellengetriebe 12 eingespeist wird. Über das eingespeiste Kühlmittel kann auch ein zweites Ventil 32 gespeist werden, durch welches eine Kupplung 34 in der Eingangswelle 24 betätigbar ist. Über die Kupplung 34 kann das Zapfwellengetriebe 12 ein- oder abgeschaltet werden.

Über das Maschinenkühlsystem 18, insbesondere das Fahrgetriebekühlsystem 20, kann eine Schmiereinheit 36 des Zapfwellengetriebes 12 mit Kühlmittel versorgt werden. Über die Schmiereinheit 36 kann das Kühlmittel zum Kühlen und Schmieren effizient an unterschiedliche Punkte in dem Zapfwellengetriebe 12 verbracht werden. Eine regelbare Schmiereinheit 36 ermöglicht dabei eine gezielte, bedarfsgerechte Verteilung des Kühlmittels innerhalb des Zapfwellengetriebes 12. Zur Steuerung und Regelung von zumindest der Schmiereinheit 36, dem ersten und/oder zweiten Ventil 30, 32 ist eine Steuerungseinrichtung 38 vorgesehen, welche beispielsweise mit einem Temperatursensor 40 verbunden sein kann, um eine sensorbasierte, insbesondere temperaturabhängige, Regelung der Kühlung und Schmierung des Zapfwellengetriebes 12 zu ermöglichen.

### Bezugszeichenliste

- 10: landwirtschaftliche Arbeitsmaschine
- 12: Zapfwellengetriebe
- 14: Antriebsmotor
- 16: Fahrgetriebe
- 18: Maschinenkühlsystem
- 20: Fahrgetriebekühlsystem
- 22: Welle
- 24: Eingangswelle
- 26: Abtriebswelle
- 28: Kühlkreislauf
- 30: erstes Ventil
- 32: zweites Ventil
- 34: Kupplung
- 36: Schmiereinheit
- 38: Steuerungseinrichtung
- 40: Temperatursensor

## Patentansprüche

1. Landwirtschaftliche Arbeitsmaschine mit einem Antriebsmotor (14), einem mit dem Antriebsmotor (14) verbundenen Fahrgetriebe (16), mindestens einem Maschinenkühlsystem (18), welches als Kühlkreislauf (28) mit einem Kühlmittel ausgestaltet ist, und einem durch den Antriebsmotor (14) antreibbaren Zapfwellengetriebe (12),
**dadurch gekennzeichnet, dass**
das Zapfwellengetriebe (12) fluidisch mit mindestens einem Maschinenkühlsystem (18) der Arbeitsmaschine (10) zum Kühlen und/oder Schmieren des Zapfwellengetriebes (12) verbunden ist.

2. Arbeitsmaschine nach Anspruch 1, **dadurch gekennzeichnet, dass** das Maschinenkühlsystem (18) ein Fahrgetriebekühlsystem (20) und/oder ein Achskühlsystem ist.

3. Arbeitsmaschine nach Anspruch 1 oder 2, **dadurch gekennzeichnet, dass** ein erstes Ventil (30) zum Steuern des Zuflusses an Kühlmittel in das Zapfwellengetriebe (12) vorgesehen ist.

4. Arbeitsmaschine nach einem der vorherigen Ansprüche, **dadurch gekennzeichnet, dass** das Zapfwellengetriebe (12) eine Eingangswelle (24) und mindestens eine Abtriebswelle (26) aufweist, wobei an der Eingangswelle (24) eine Kupplung (34) angeordnet ist.

5. Arbeitsmaschine nach einem der vorherigen Ansprüche, **dadurch gekennzeichnet, dass** das Zapfwellengetriebe (12) ein zweites Ventil (32) zum Schalten der Kupplung (34) aufweist.

6. Arbeitsmaschine nach einem der vorherigen Ansprüche, **dadurch gekennzeichnet, dass** das Zapfwellengetriebe (12) derart ausgestaltet, dass ein Systemdruck eines Maschinenkühlsystems (18) zum Schalten einer Übersetzung des Zapfwellengetriebes (12) nutzbar ist.

7. Arbeitsmaschine nach einem der vorherigen Ansprüche, **dadurch gekennzeichnet, dass** das Zapfwellengetriebe (12) eine Schmiereinheit (36) aufweist.

8. Arbeitsmaschine nach einem der vorherigen Ansprüche, **dadurch gekennzeichnet, dass** die Schmiereinheit (36) einen einstellbaren Volumenstrom und/oder Druck aufweist.

9. Arbeitsmaschine nach einem der vorherigen Ansprüche, **dadurch gekennzeichnet, dass** eine Steuerungseinheit (38) zumindest zur Steuerung der Schmiereinheit (36), des ersten und/oder zweiten Ventils (30, 32) vorgesehen ist.

10. Arbeitsmaschine nach einem der vorherigen Ansprüche, **dadurch gekennzeichnet, dass** das Zapfwellengetriebe (12) einen Temperatursensor (40) aufweist.
